# EUROPÄISCHE PATENTANMELDUNG

(11) **EP 0 595 139 A1**
(43) Veröffentlichungstag der Anmeldung: **04.05.1994**
(21) Anmeldenummer: 93116745.6
(22) Anmeldetag: 16.10.1993
(51) Int. Cl.: C08L 59/00, C08K 5/09, E03D 9/00

(54) **Polyoxymethylen mit verbesserter Stabilität gegen Säuren, Verfahren zu seiner Herstellung sowie Verwendung**

(30) Priorität: 24.10.1992 DE 4235958
(71) Anmelder: Degussa Aktiengesellschaft, D-60311 Frankfurt (DE)
(72) Erfinder: Nun, Edwin, Dr., D-63636 Brachttal (DE); Arnoldi, Detlef, Dr., D-67273 Weisenheim am Berg (DE); Schauhoff, Stephanie, Dr., D-60385 Frankfurt am Main (DE)

(57) **Zusammenfassung**

2.1. Polyoxymethylen (Polyacetal) ist ein ausgezeichneter Werkstoff, aus dem sich mit hoher Genauigkeit insbesondere steife Gebrauchsgegenstände herstellen lassen. Da Polyoxymethylen jedoch säureempfindlich ist, ist Aufgabe der vorliegenden Erfindung ein Polyoxymethylen, das gegenüber Säuren stabilisiert ist.

2.2. Durch Zugabe von 0,01 bis 5 Teile eines Alkalisalzes einer mehrwertigen Säure, z. B. Oxalsäure, Citronensäure, und/oder 0,01 bis 5 Teile eines Polyalkylenglycols, z. B. Polyethylenglycol, und/oder 0,1 bis 100 Teile eines thermoplastischen Polyurethans, jeweils bezogen auf 100 Teile eines Polyoxymethylens, wird dieses gegen Säureangriffe stabilisiert, wobei insbesondere die Kombination eines Alkalisalzes, insbesondere eines Oxalates, mit wenigen Teilen eines thermoplastischen Polyurethans vorteilhaft ist. Der Gewichtsverlust eines stabilisierten POM kann bei Säureeinwirkung weniger als 3 % gegenüber einem unstabilisierten POM betragen.

2.3. Einsatzgebiete, bei denen die Produkte sauren Agentien ausgesetzt sind, wie Bewässerungsanlagen, Spülmaschinen, Sanitärbereich.

## Beschreibung

Die Erfindung betrifft Polyoxymethylen mit verbessertem Säureschutz, ein Verfahren zur Herstellung von Polyoxymethylen mit verbessertem Säureschutz sowie die Verwendung von Polyoxymethylen in Kontakt mit sauren Medien.

Polyoxymethylen (Polyacetal) ist ein ausgezeichneter Werkstoff, aus dem sich insbesondere durch Spritzguß die unterschiedlichsten Gebrauchsgegenstände herstellen lassen. Von Vorteil ist dabei insbesondere die chemische Resistenz gegen viele organische Lösungsmittel sowie Basen. Seit der Markteinführung der Polyacetale werden Versuche durchgeführt, die aus der chemischen Struktur resultierende Säurelabilität zu vermindern. Die wiederkehrende Acetalstruktur in der Polymerkette weist, wenn keine Schutzmaßnahmen durchgeführt werden, instabile Halbacetal-Endgruppen auf, an denen der Abbau des Polymers erfolgt. Zur Stabilisierung des Polymers können, wie in H. Cherdron, L. Höhr, W. Kern, Makromol. Chem., 52, 48ff (1962) beschrieben, die Endgruppen des Polymers durch Veresterung oder Veretherung geschützt werden. Ein anderer Weg ist der Einbau von Comonomeren, die bei einem Abbau der Polymerkette eine stabile Endgruppe bilden. Hierdurch wird Polyoxymethylen (POM) alltagstauglich, die Labilität gegenüber Säuren bleibt jedoch bestehen, da (vgl. V. V. Pchelintsev, A. Yu. Sokolov, G. E. Zaikov, Polym. Degradation and Stability, 21(4), 285 (1988)) die säurekatalysierte hydrolytische Zersetzung von POM auch an beliebiger Stelle des Polymers erfolgen kann und somit stabilisierte Endgruppen oder Comonomereinheiten keinen ausreichenden Schutz gewährleisten. Aus der DE-PS 11 93 240 ist bekannt, daß insbesondere hohe Anteile eines Urethans den bei der Acidolyse entstehenden Formaldehyd abfangen. Ein Beispiel hierfür ist ein Formkörper mit 40 % POM. Hierdurch wird ggf. eine Geruchsbelästigung oder Gesundheitsgefährdung durch freigesetzten Formaldehyd vermindert, der Abbau des POMs bleibt jedoch bestehen. Außerdem hat ein Produkt mit 40 % POM / 60 % TPU keine POM-Matrix mehr, so daß die vorteilhaften Eigenschaften des POMs (z. B. Steifigkeit) verloren gehen. In der DE-PS 12 35 585 wird die Acylierung von POM mittels Carbodiimid beschrieben. Der acidolytische Abbau der Polymerisate durch freie Essigsäure wird dabei beträchtlich herabgesetzt. Das Carbodiimid soll insbesondere gegen die kurzzeitigen sauren Bedingungen bei der Veresterung stabilisieren. Untersuchungen haben jedoch gezeigt, daß die so hergestellten Produkte ebenfalls für saure Einsatzbedingungen ungeeignet sind.

Ferner ist z. B. aus der DE-PS 25 40 207 bekannt, dem POM zum Schutz gegen während der Herstellung und Verarbeitung auftretende saure Bedingungen basische Substanzen, wie z. B. Salze, zuzusetzen. Die basischen Substanzen dienen der Neutralisation saurer Komponenten im Polymer, geeignet sind daher nur Salze, deren Säureanteil nicht selbst das POM angreift. So kann z. B. einem Polyoxymethylen eine geringe Menge an Natriumcarbonat zugegeben werden. Die so erhaltenen Produkte sind ebenfalls für saure Einsatzbedingungen nicht geeignet.

Aus der DE-OS 37 03 232 sind POM/TPU-Formmassen bekannt, in denen das Polyoxymethylen 5,3 bis 150 Teile eines thermoplastischen Polyurethans aufweist, und ggf. 0,1 bis 5 Teile, bezogen auf die Gesamtmenge POM + TPU, Erdalkalisalze von aliphatischen, vorzugsweise hydroxylgruppenhaltigen aliphatischen ein- bis dreibasigen Carbonsäuren mit 2 - 20 C-Atomen.

Das TPU wird gemäß der DE-OS 37 03 232 intermediär hergestellt, wobei man das POM mit den für das TPU benötigten Aufbaukomponenten mischt und dann reagieren läßt.

Bei den angegebenen hohen TPU-Gehalten verliert die Formmasse die Steifigkeit des POM's, während der Zusatz von Erdalkalisalzen mehrwertiger Carbonsäuren lediglich zur Wärmestabilisierung dient. Die Säurelabilität der Formmasse bleibt erhalten.

Aufgabe der vorliegenden Erfindung ist ein Polyoxymethylen bzw. ein Herstellungsverfahren für ein Polyoxymethylen, das gegenüber Säuren stabilisiert ist. Das Polyoxymethylen soll möglichst weitgehend seine ursprünglichen physikalischen Eigenschaften, wie z. B. Steifigkeit, Zähigkeit, Farbe, beibehalten.

Gelöst wird diese Aufgabe hinsichtlich des Polyoxymethylens mit einer Zusammensetzung gemäß Anspruch 1.

Erfindungsgemäß wurde festgestellt, daß verschiedene Stoffe geeignet sind, die Säurelabilität von POM zu verringern. Als besonders günstig hat sich dabei herausgestellt, daß auch Mischungen verschiedener Stoffe zugesetzt werden können, wobei eine Steigerung der Säurestabilität über die Wirkung der Einzelkomponenten hinaus erreicht werden kann. Andererseits hat sich gezeigt, daß einige Stoffe, die in POM bislang als Säurefänger eingesetzt wurden, die Säurebeständigkeit des fertigen Produktes teils sogar nachteilhaft beeinflussen und zu erheblichen Verfärbungen führen können. So sind z. B. Carbodiimide und auch Natriumcarbonat für die Zwecke der vorliegenden Erfindung ungeeignet.

Als wenig geeignet haben sich auch Salze von mehrwertigen Carbonsäuren herausgestellt, die ein oder mehrere Stickstoffatome enthalten bzw. schlecht löslich sind. Solche Verbindungen, z. B. Ethylendiamintetraacetatdinatrium oder Natriumglutamat führen zu starken Verfärbungen bzw. - z. B. Calciumoxalat - haben nur mangelnde säurestabilisierende Eigenschaften. Nichtsdestotrotz können solche Verbindungen, z. B. EDTA-Salze, z. B. in Mischungen mit anderen säurestabilisierend wirkenden Substanzen, wie z. B. thermoplastischem Polyurethan (TPU) und/oder löslichen Oxalaten, die Säurestabilisierung noch steigern.

Für TPU wurde gefunden, daß die säurestabilisierende Wirkung mit der Shore-Härte des TPU abnimmt. Insbesondere TPU mit Shore-Härte A sind besonders vorteilhaft, wobei der Bereich 80 - 96, insbesondere 85 bis 87 besonders geeignet ist. Mit diesem TPU in Kombination mit einem löslichen Oxalat, z. B. Natriumoxalat, und ggf. mit weiteren Säurestabilisatoren, konnten höchste Stabilisierungen erzielt werden. Mit dieser Kombination können Stabilisierungsraten von über 80 %, teils sogar über 90 % erreicht werden, wobei relativ geringe Mengen der Zusätze (z. B. TPU 0,5 bis 8 %, insbesondere 1 - < 3 %, Natriumoxalat 0,05 bis 0,5 %) schon zu besten Ergebnissen führen. Aufgrund der geringen Einsatzmengen der stabilisierend wirkenden Komponenten ist es möglich, ein säurestabilisiertes POM zu erhalten, das in seinen mechanischen Eigenschaften gegenüber dem nicht stabilisierten POM nur wenig verändert ist.

Die Stabilisierung des POM wird erfindungsgemäß wie folgt bestimmt:
Rohes Polyoxymethylen wird auf einer ZSK 28 (Zwei-Schnecken-Coextruder) unter üblichen Bedingungen mit Zuschlagstoffen extrudiert. Die aus dem Extruder austretenden Stränge werden zur Kühlung durch kaltes Wasser geleitet und anschließend granuliert. Aus den getrockneten Granulaten werden bei 190°C Preßplatten der Größe 15,8 cm x 15,8 cm x 0,2 cm gepreßt, aus denen Probekörper der Dimensionen 7,8 cm x 1 ,0 cm x 0,2 cm gesägt werden. Die Probekörper werden am oberen Ende durchbohrt, entgratet, exakt nachvermessen und gewogen.

### Test 1:

Jeweils fünf Probekörper einer Platte werden 5 cm tief in 2 gew.-%ige Phosphorsäure eingetaucht, langsam herausgezogen, die anhaftende Säure läßt man abtropfen. Die letzten, am unteren Ende der Probekörper anhaftenden Säuretropfen werden durch Auftupfen auf Zellstoff entfernt. Die Probekörper werden vorsichtig auf einen Draht aufgezogen und untereinander berührungsfrei bei einer relativen Luftfeuchtigkeit zwischen 20 und 30 % 24 h lang aufgehängt. Die Luftfeuchtigkeit wird durch Kieselgel eingestellt, daß täglich gewechselt wird, wodurch sich eine Luftfeuchtigkeit von ca. 20 % einstellt, die innerhalb von 24 h bis max. 30 % ansteigt. Die am Probekörper verbleibenden Säurespuren verursachen eine Korrosion (Krater im Probekörper) deren Ausmaß durch Wiegen bestimmt wird. Danach werden die Probekörper erneut der Phosphorsäure ausgesetzt. Diese Prozedur wird so oft wiederholt, bis die Probekörper - zumindest ein Probekörper aus nichtstabilisiertem POM - deutliche Schädigungen aufweist (Verlust ≧ 5 mg/cm²). Zu große Schädigungen sollen vermieden werden, da hierdurch die Geometrie des Probekörpers derart verändert wird, daß die Bestimmung des Verlustes in mg/cm² erschwert wird. Die Zeit von 24 h wurde gewählt, da nach dieser Zeit bei den angegebenen Bedingungen (Raumtemperatur) keine weitere Schädigung mehr auftritt. Dies bedeutet, daß der Probekörper ggf. auch länger unter den angegebenen Bedingungen verbleiben kann, bevor er wieder in die Phosphorsäure getaucht wird. Dies erlaubt es auch, daß die Probekörper z. B. an Wochenenden nicht behandelt werden müssen. Im vorliegenden Fall wurden am 5. und 6. Tag die Probekörper nicht in die Phosphorsäure getaucht.

### Test 2:

Die gemäß Test 1 vorbereiteten Probekörper werden in 10 gew.-%iger Phosphorsäure bei 80°C so gelagert, daß die Probekörper vollständig durch Säure bedeckt sind. Nach 24 h werden die Probekörper entnommen, mit einem Warmluftgebläse getrocknet und der Gewichtsverlust bestimmt. Die Prozedur wird so oft wiederholt, bis die in Test 1 angegebenen Schädigungen auftreten.

Für beide Tests wird der durchschnittliche Masseverlust in % (mg/cm² getauchte Oberfläche) bezüglich des durchschnittlichen Masseverlustes des Standardpolyoxymethylens bestimmt.

Die erfindungsgemäß erhaltenen Polyoxymethylen-Mischungen mit verbesserter Säurebeständigkeit sind besonders geeignet für Einsatzzwecke, bei denen die Produkte zumindest zeitweise sauren Agentien ausgesetzt sind, insbesondere für Teile von oder komplette Bewässerungsanlagen mit Düngemittelausbringung, Dosierbehälter jeglicher Art, z. B. in Spülmaschinen (Entkalkungsmittel sind Säuren), Produkte zur Aufbewahrung oder Förderung von chloriertem oder fluoriertem Wasser, Teile für den Sanitärbereich.

Die erfindungsgemäßen Polyoxymethylene mit verbessertem Säureschutz enthalten
- A: mindestens ein Polyoxymethylen,
- B: 0,01 - 5 Teile, insbesondere 0,1 - 2 Teile, bezogen auf 100 Teile A, mindestens ein Alkalisalz einer mehrwertigen Säure ausgewählt aus der Gruppe Oxalsäure, Maleinsäure, Fumarsäure, und/oder Natrium- und/oder Kaliumsalz der Citronensäure, und/oder
- C: 0,01 - 5 Teile, insbesondere 0,1 - 2 Teile, bezogen auf 100 Teile A ein Polyethylenglykol mit einem Molekulargewicht ≦ 5000 und/oder ein Polypropylenglykol und/oder ein Polybutylenglykol,
- D: 0,1 - 3 Teile bezogen auf 100 Teile A eines thermoplastischen Polyurethans mit einer Shore-Härte A von 70 bis 96.

Vorteilhaft haben diese Polyoxymethylenmischungen bei einer Säurebehandlung einen Masseverlust je Flächeneinheit von max. 75 % , vorteilhaft max. 50 %, insbesondere max. 33 % und besonders bevorzugt max. 15 %, bezogen auf die Komponente A, wobei die Säurebehandlung die folgenden Schritte umfaßt:
kurzes Eintauchen eines Probekörpers in 2 gew.-%ige Phosphorsäure,
Lagern des Probekörpers etwa 24 h bei 20 - 30 % rel. Luftfeuchtigkeit,
ggf. Wiederholen der Schritte bis ein entsprechend behandelter Probekörper aus der Komponente A einen Verlust von mind. 5 mg/cm² aufweist.

Alternativ oder auch gleichzeitig haben die Polyoxymethylene bei einer Säurebehandlung einen Masseverlust je Flächeneinheit von max. 75 %, vorteilhaft max. 50 %, insbesondere max. 33 % und besonders bevorzugt max. 15 %, bezogen auf die Komponente A, wobei die Säurebehandlung die folgenden Schritte umfaßt:
Eintauchen eines Probekörpers in 10 gew.-%ige Phosphorsäure bei 80°C,
Kontrolle des Masseverlustes des Probekörpers nach 24 h, wobei der Probekörper der 10 gew.-%igen Phosphorsäure entnommen und mit einem Warmluftgebläse getrocknet wird,
ggf. Wiederholen der Schritte bis ein entsprechend behandelter Probekörper aus der Komponente A einen Verlust von mind. 5 mg/cm² aufweist.

Einen besonders hohen Säureschutz erreicht man mit Polyoxymethylenen der o. g. Art, die neben den Komponenten B und/oder C noch, bezogen auf 100 Teile der Komponente A bis zu 100 Teile, vorteilhaft bis zu 50 Teile, insbesondere bis zu 25 Teile und besonders bevorzugt bis zu 10 Teile, eines thermoplastischen Polyurethans enthalten. Sofern weder B noch C zugegeben ist, kann das POM neben der Komponente D noch die genannten Teile an einem anderen als in D definierten thermoplastischen Polyurethan enthalten. Außerdem kann das POM bis zu 5 Teile eines anderen als in C definierten Polyalkylenglykols, wobei die Summe aller Polyalkylenglykole vorzugsweise max. 5 Teile, bezogen auf 100 Teile A, beträgt, und bis zu 15 Teile Melamincyanurat enthalten.

Üblicherweise enthalten die erfindungsgemäßen Polyoxymethylene auch Zusätze wie z. B. Antioxidanzien, Ruß, Farbstoffe, UV-Absorber, Wärmestabilisatoren, Brandschutzmittel, etc. Diese Zusätze können in die Mischungen oder auch in einzelne Komponenten davon eingearbeitet sein. Insbesondere für Außenanwendungen sind UV-Stabilisatoren und/oder Ruß zur Verhinderung von vorzeitiger Alterung zweckmäßig.

Als Polyoxymethylene für die Komponente A sind geeignet Homopolymere oder Copolymere, z. B. hergestellt aus Formaldehyd oder Trioxan. Sie können eine lineare Struktur aufweisen, aber auch verzweigt oder vernetzt sein. Sie können einzeln oder als Gemische eingesetzt werden. Homopolymere sind z. B. Polymere des Formaldehyds oder des Trioxans, deren halbacetalische Hydroxylendgruppen chemisch, beispielsweise durch Veresterung oder Veretherung gegen Abbau, stabilisiert sind. Copolymere erhält man insbesondere durch Copolymerisation des Trioxans mit mindestens einer mit Trioxan copolymerisierbaren Verbindung. Geeignet hierfür sind beispielsweise cyclische Ether, insbesondere mit 3 - 5, vorzugsweise 3 Ringgliedern, von Trioxan verschiedene cyclische Acetale, insbesondere Formale, z. B. mit 5 - 11, vorzugsweise 5 - 8 Ringgliedern, und lineare Polyacetale, insbesondere Polyformale. Die genannten Cokomponenten werden vorzugsweise in Mengen von 0,01 - 20, insbesondere 0,1 - 10 und besonders vorteilhaft zu 1 - 5 Gew.-% eingesetzt. Als cyclische Ether eignen sich vor allem Epoxide, z. B. Ethylenoxid, Styroloxid, Propylenoxid oder Epichlorhydrin sowie Glycidylether von ein- oder mehrwertigen Alkoholen oder Phenolen. Als cyclische Acetale eignen sich vor allem cyclische Formale von aliphatischen oder cycloaliphatischen α,ω-Diolen mit 2 - 8, vorzugsweise 2 - 4 Kohlenstoffatomen, deren Kohlenstoffkette in Abständen von 2 Kohlenstoffatomen durch ein Sauerstoffatom unterbrochen sein kann, z. B. 1,2- oder 1,3-Dioxolan, 1,3-Dioxan, 1,3-Dioxepan, etc.

Geeignet sind aber auch insbesondere für die Herstellung von Terpolymeren des Trioxans Diformale, z. B. Diglycerindiformal.

Als lineare Polyacetale eignen sich sowohl Homo- oder Copolymere der vorstehend definierten cyclischen Acetale als auch lineare Kondensate aus aliphatischen oder cycloaliphatischen α,ω-Diolen mit aliphatischen Aldehyden oder Thioaldehyden, vorzugsweise Formaldehyd. Insbesondere werden Homopolymere cyclischer Formale von aliphatischen α,ω-Diolen mit 2 - 8 Kohlenstoffatomen verwendet, z. B. Poly-(1,3-dioxolan), Poly-(1,3-dioxan) und Poly-(1,3-dioxepan).

Die Werte für die Viskositätszahl der erfindungsgemäß eingesetzten Polyoxymethylene (gemessen an einer Lösung des Polymeren in Dimethylformamid, das 2 Gew.-% Diphenylamin enthält, bei 135°C in einer Konzentration von 0,5 g/100 ml) sollen im allgemeinen mindestens 30 (ml/g) betragen. Die Kristallitschmelzpunkte der Polyoxymethylene liegen vorzugsweise im Bereich von 140 - 180°C, insbesondere 150 - 170°C; die Dichten liegen üblicherweise zwischen 1,38 - 1,45 g/cm³ (gemessen nach DIN 53 479).

Die erfindungsgemäß verwendeten vorzugsweise binären oder ternären Trioxan-Copolymeren werden in bekannter Weise durch Polymerisieren der Monomeren in Gegenwart kationisch wirkender Katalysatoren bei Temperaturen zwischen 0 und 150°C, vorzugsweise oberhalb 70°C, hergestellt (vgl. z. B. DE-AS 14 20 283). Die Polymerisation kann in Masse, Suspension oder Lösung erfolgen. Zur Entfernung instabiler Anteile können die Copolymeren einem thermischen oder hydrolytisch kontrollierten, partiellen Abbau bis zu primären Alkoholendgruppen unterworfen werden (vgl. z. B. DE-AS 14 45 273 und 14 45 294).

Weitere Darstellungsmethoden sind in z. B. DE-AS 10 37 705 und 11 37 215 beschrieben.

Weiterhin können die erfindungsgemäßen Formmassen noch üblicherweise bis zu 3 Gew.-%, bezogen auf das Gewicht des Polyoxymethylens, an weiteren in Polyoxymethylen-Formmassen üblichen Zusätzen enthalten. Dies können sein:
- Antioxidantien, insbesondere phenolische Verbindungen, z. B. solche mit 2 - 6 Hydroxyphenylresten im Molekül, wie z. B. in der DE-PS 25 40 207 beschrieben.
- UV-Adsorber und Lichtschutzmittel, wie z. B. 2-(2'-Hydroxyphenyl)-benzotriazole, 2,4-Bis-2'-hydroxyphenyl)-6-alkyl-s-triazine und 4-Hydroxybenzophenone.
- Wärmestabilisatoren, wie z. B. Carbonsäureamide, insbesondere Oxalsäure, Malonsäure-, Isophthalsäure-, Terephtahalsäurediamid und Trimesinsäuretriamid; Polyamide, Salze langkettiger Carbonsäuren, wie z. B. Ca-Stearat, Melamin, s-Triazinderivate oder Kondensationsprodukte aus Melamin und Formaldehyd.

Bei den erfindungsgemäß verwendeten thermoplastischen Polyurethanen handelt es sich um an sich bekannte Produkte, wie sie beispielsweise in der DE-PS 11 93 240 oder der DE-OS 20 51 028 beschrieben sind. Sie werden in an sich bekannter Weise durch Polyaddition aus Polyisocyanaten, insbesondere Diisocyanate, Polyestern und/oder Polyethern bzw. Polyesteramiden oder anderen geeigneten Hydroxy- bzw. Aminoverbindungen, wie hydroxyliertem Polybutadien, und ggf. Kettenverlängerern wie niedermolekularen Polyolen, insbesondere Diolen, Polyaminen, insbesondere Diaminen, oder Wasser hergestellt.

Grundsätzlich sind alle Polyurethantypen sowie deren Kombinationen, wie z. B. Polyesterurethane, Polyetheresterurethane, Polyetherurethane, aliphatische TPU und/oder Polyethercarbonaturethane geeignet. Vorzugsweise werden jedoch Polyesterurethane eingesetzt. Hierbei werden solche mit Shore Härte A von 80 - 96 bevorzugt, besonders bevorzugt sind solche mit Shore Härte A von 84 - 92. Die eingesetzte Polyurethankonzentration beträgt 0,1 - 3 Gew.-Teile bezogen auf 100 Teile Polyoxymethylen.

Besonders geeignet sind Polyoxymethylenmischungen aus mindestens einem Polyoxymethylen (A) und mindestens einem thermoplastischen Polyurethan mit einer Shore-Härte A von 80 bis 96, wobei die Mischung auf 100 Teile Polyoxymethylen 0,1 - 3 Teile des TPUs enthält. Besonders günstig sind auch Zusammensetzungen, die auf 100 Teile Polyoxymethylen zusätzlich oder alternativ zum TPU 0,01 - 5 Teile, insbesondere 0,1 - 0,4 Teile eines Salzes einer mehrwertigen organischen Säure, insbesondere eines Alkalioxalates, insbesondere Natrium- oder Kaliumoxalat enthalten. Die Verbindungen der genannten Art unterscheiden sich kaum von dem reinen Polyoxymethylen, haben insbesondere dessen Steifigkeit, zusätzlich jedoch einen sehr hohen Säureschutz.

Als Komponente C sind geeignet Polyalkylenglykole, bevorzugt werden Polyethylenglykole und Polypropylenglykole eingesetzt, besonders bevorzugt sind Polyethylenglykole. Das Molekulargewicht der eingesetzten Polyalkylenglykole ist ≦ 5000, vorzugsweise 800 - 2000, besonders bevorzugt 900 - 1500.

Die Erfindung betrifft auch ein Verfahren zur Herstellung eines Polyoxymethylens mit verbessertem Säureschutz, bei dem
- A: 100 Teile eines Polyoxymethylens mit
- B: 0,01 - 5 Teile eines Salzes einer mehrwertigen Carbonsäure
und/oder
- C: 0,01 - 5 Teile eines Polyalkylenglykols,
und/oder
- D: 0,01 - 100 Teile eines thermoplastischen TPU
sowie
- E: 0 - 15 Teile Melamincyanurat und
- F: übliche Zusätze
vermischt werden.

Die Säurebeständigkeit der so hergestellten Produkte kann wie oben beschrieben bestimmt werden.

Vorzugsweise werden die erfindungsgemäßen Polyoxymethylenzusammensetzungen zu Formkörpern weiterverarbeitet.

Die Erfindung betrifft auch die Verwendung von
0,01 - 5 Teilen eines Salzes einer mehrwertigen Carbonsäure (B)
und/oder
0,01 - 5 Teilen eines Polyalkylenglykols (C), wie z. B. eines Polyethylenglykols,
Polypropylenglykols und/oder Polybutylenglykol
und/oder
0,01 - 100 Teilen eines thermoplastischen Polyurethans (D)
und
0 - 15 Teilen Melamincyanurat (E)
auf 100 Teile eines Polyoxymethylens (A) zur Verbesserung der Säurebeständigkeit oder in einem Formkörper mit verbesserter Säurebeständigkeit, wobei auch hier die oben beschriebenen Verfahren zur Bestimmung des Säureschutzes zur Anwendung kommen können.

Auch beim Verfahren und der Verwendung gelten die oben genannten besonderen Bereiche für die zugegebenen Komponenten. Für die TPU sind diejenigen mit Shore-Härte A sowie die oben genannten kleineren Einsatzmengen wiederum bevorzugt.

Die Erfindung wird in den nachfolgenden Beispielen näher beschrieben.

### Beschreibung der Einsatzstoffe

- POM 1:: Copolymeres aus Trioxan und 1.3-Dioxepan mit ca. 2,55 % Comonomeranteil, bereits stabilisiert mit 0,4 % Triethylenglykol-bis-(3-tert.butyl-5-methyl-4-hydroxyphenyl)-propionat als Antioxidans.
MFI: 8 bis 10 g/10 min (190°C/2,16 kp)
- POM 2:: Copolymeres aus Trioxan und 1.3-Dioxepan mit ca. 1,0 % Comonomerantei, bereits stabilisiert mit 0,4 % Triethylenglykol-bis-(3-tert.butyl-5-methyl-4-hydroxyphenyl)-propionat als Antioxidans.
MFI: 12 - 14 g/10 min (190°C/2,16 kp)
- TPU 1:: Polyetherester-Urethan, Shore A Härte 85
- TPU 2:: Polyethercarbonat-Urethan, Shore A Härte 88
- Ruß 1:: Furnace-Ruß mit einer BET-Oberfläche von ca. 300 m²/g als 25%iges Konzentrat in Polyoxymethylen als Matrix, granuliert. Der pH-Wert des Rußes beträgt 10 ± 1,5.
- Ruß 2:: Farbruß mit einer BET-Oberfläche von ca. 260 m²/g als 12,5 %iges Konzentrat in Polyoxymethylen. Die DBP-Adsorption beträgt 160 ml/100 g pulverförmigem Ruß.

Sonstige Zusatzstoffe:
Natriumoxalat, feinkristalline technische Qualität
Lithiumoxalat, technische Qualität
Kaliumoxalat, technische Qualität
Melamincyanurat (MCA), technische Qualität
Polyethylenglykol 1000, zur Synthese
Polyethylenglykol 10 000, zur Synthese
Polypropylenglykol 1000, technische Qualität
Feinteiliges, vernetztes Melamin-Formaldehyd-Kondensat (MFK)
EDTA-Dikalium, p. A.

### Beispiele

### Vergleichsbeispiel a und Beispiele 1 - 6

Die Komponenten POM 2, MFK, TPU 1 und Natriumoxalat wurden in den in Tabelle 1 angegeben Gewichtsverhältnissen, jeweils bezogen auf POM 2, vermischt, in einen Zweiwellenextruder vom Typ ZDS-K 28 aufgeschmolzen und homogenisiert und die homogenisierte Mischung wurde granuliert. Aus dem Granulat wurden bei 190°C Platten der Dimension 15,8 x 15,8 x 0,2 cm gepreßt. Daraus wurden Probekörper der Dimension 7,8 x 1,0 x 0,2 cm ausgesägt, entgratet, exakt nachvermessen und gewogen.

**Tabelle 1**

| Vergleichsversuch/Beispiel | TPU 1 [%] | Natriumoxalat [%] | MFK [%] | Korrosionsrate | |
|---|---|---|---|---|---|
| | | | | Test 1 (9 d) | Test 2 (7 d) |
| | | | | [%] rel. zu a | |
| a | - | - | 0,15 | 100,0 | 100,0 |
| 1 | 3 | - | 0,15 | 24,9 | 62,6 |
| 3 | 6 | - | 0,15 | 11,2 | 42,2 |
| 4 | - | 0,2 | 0,15 | 60,6 | 70,4 |
| 5 | 3 | 0,2 | 0,15 | 14,4 | 34,6 |
| 6 | 6 | 0,2 | 0,15 | 8,3 | 19,6 |

### Vergleichsbeispiel b und Beispiele 7 - 12

Die Komponenten POM 1, MFK, TPU 1 und Natriumoxalat wurden in den in Tabelle 2 angegebenen Gewichtsverhältnissen,jeweils bezogen auf POM 1, vermischt, in einen Zweiwellenextruder vom Typ ZDS-K 28 aufgeschmolzen und homogenisiert und die homogenisierte Mischung wurde granuliert. Die Herstellung der Probekörper erfolgte wie oben beschrieben.

**Tabelle 2**

| Vergleichsversuch / Beispiel | TPU 1 [%] | Natriumoxalat [%] | MFK [%] | Korrosionsrate | |
|---|---|---|---|---|---|
| | | | | Test 1 (10 d) | Test 2 (7 d) |
| | | | | [%] rel. zu b | |
| b | - | - | 0,15 | 100,0 | 100,0 |
| 7 | 1 | - | 0,15 | 56,7 | n. b. |
| 8 | 4 | - | 0,15 | 10,9 | 26,0 |
| 9 | 8 | - | 0,15 | 5,5 | 12,2 |
| 10 | 2 | 0,2 | 0,15 | 15,5 | 39,9 |
| 11 | 4 | 0,2 | 0,15 | 6,8 | 14,5 |
| 12 | 8 | 0,2 | 0,15 | 4,4 | 6,3 |

### Vergleichsbeispiel c und Beispiele 13 - 14

Die Komponenten POM 1, MFK, TPU 1 und TPU 2 wurden in den in Tabelle 3 angegebenen Gewichtsverhältnissen, jeweils bezogen auf POM 1, vermischt, in einen Zweiwellenextruder vom Typ ZDS-K 28 aufgeschmolzen und homogenisiert und die homogenisierte Mischung wurde granuliert. Aus dem Granulat wurden bei 190°C Platten der Dimension 15,8 x 15,8 x 0,2 cm gepreßt. Daraus wurden Probekörper der Dimension 7,8 x 1,0 x 0,2 cm ausgesägt, entgratet, exakt nachvermessen und gewogen.

**Tabelle 3**

| Beispiel | TPU 1 [%] | TPU 2-[%] | MFK [%] | Korrosionsrate | |
|---|---|---|---|---|---|
| | | | | Test 1 (10 d) | Test 2 (10 d) |
| | | | | [%] rel. zu c | |
| c | - | - | 0,15 | 100,0 | 100,0 |
| 13 | 6 | - | 0,15 | 7,3 | 4,0 |
| 14 | - | 6 | 0,15 | 7,3 | 16,8 |

### Vergleichsbeispiel d und Beispiele 15 - 17

Die Komponenten POM 1, MFK, Lithiumoxalat, Kaliumoxalat und Tri-Natriumcitrat wurden in den in Tabelle 4 angegebenen Gewichtsverhältnissen, jeweils bezogen auf POM 1,vermischt, in einen Zweiwellenextruder vom Typ ZDS-K 28 aufgeschmolzen und homogenisiert und die homogenisierte Mischung wurde granuliert. Die Herstellung der Probekörper erfolgte wie oben beschrieben.

**Tabelle 4**

| Beispiel | MFK [%] | Li-oxalat [%] | k-oxalat [%] | Na-citrat [%] | Korrosionsrate (11d) [%] rel. zu d |
|---|---|---|---|---|---|
| d | 0,15 | - | - | - | 100,0 |
| 15 | 0,15 | 0,3 | - | - | 34,6 |
| 16 | 0,15 | - | 0,3 | - | 44,2 |
| 17 | 0,15 | - | - | 0,3 | 39,6 |

### Vergleichsbeispiel e und Beispiele 18 und 32

Die Komponenten POM 1, MFK, Ruß, EDTA-K2 und Na-oxalat wurden in den in Tabelle 5 angegebenen Gewichtsverhältnissen, jeweils bezogen auf POM 1, vermischt, in einen Zweiwellenextruder vom Typ ZDS-K 28 aufgeschmolzen und homogenisiert und die homogenisierte Mischung wurde granuliert. Aus dem Granulat wurden bei 190°C Platten der Dimension 15,8 x 15,8 x 0,2 cm gepreßt. Daraus wurden Probekörper der Dimension 7,8 x 1,0 x 0,2 cm ausgesägt, entgratet, exakt nachvermessen und gewogen.

**Tabelle 5**

| Beispiel | MFK [%] | Ruß [%] | EDTA-K2-[%] | Na-oxalat [%] | Korrosionsrate | |
|---|---|---|---|---|---|---|
| | | | | | Test 1 (11 d) | Test 2 (7 d) |
| | | | | | [%] rel. zu e | |
| e | 0,15 | 0,2 | - | - | 100,0 | 100,0 |
| 18 | 0,15 | 0,2 | - | 0,16 | 54,2 | 67,2 |
| 32 | 0,15 | 0,2 | 0,16 | - | 62,5 | 64,7 |

### Vergleichsbeispiel f und Beispiele 19 - 25

Die Komponenten POM 1, MFK, TPU 1, PEG 1000, MCA und Natriumoxalat wurden in den in Tabelle 6 angegebenen Gewichtsverhältnissen, jeweils bezogen auf POM 1, vermischt, in einen Zweiwellenextruder vom Typ ZDS-K 28 aufgeschmolzen und homogenisiert und die homogenisierte Mischung wurde granuliert. Die Herstellung der Probekörper erfolgte wie oben beschrieben.

**Tabelle 6**

| Beispiel | MFK [%] | TPU 1 [%] | PEG 1000 [%] | MCA [%] | Na-oxalat [%] | Korrosionsrate | |
|---|---|---|---|---|---|---|---|
| | | | | | | Test 1 (11 d) | Test 2 (7 d) |
| | | | | | | [%] rel. f | |
| f | 0,15 | - | - | - | - | 100,0 | 100,0 |
| 19 | 0,15 | 6 | - | - | - | 7,5 | 2,5 |
| 20 | 0,15 | - | - | - | 1,0 | 25,4 | 76,3 |
| 21 | 0,15 | - | 1,0 | - | - | 31,5 | 70,1 |
| 22* | 0,15 | - | - | 1,0 | - | 30,6 | 67,5 |
| 23 | 0,15 | 6 | - | - | 1,0 | 5,5 | 3,8 |
| 24 | 0,15 | 6 | 1,0 | - | - | 3,2 | 0 |
| 25 | 0,15 | 6 | - | 1,0 | - | 6,1 | 16,2 |

| | | | | | | | |
|---|---|---|---|---|---|---|---|
| * Vergleich | | | | | | | |

### Vergleichsbeispiel g und Beispiele 26 - 31

Die Komponenten POM 1, MFK, PEG 1000, PEG 10000 und PPG 1000 wurden in den in Tabelle 7 angegebenen Gewichtsverhältnissen, jeweils bezogen auf POM 1, vermischt, in einen Zweiwellenextruder vom Typ ZDS-K 28 aufgeschmolzen und homogenisiert und die homogenisierte Mischung wurde granuliert. Aus dem Granulat wurden bei 190°C Platten der Dimension 15,8 x 15,8 x 0,2 cm gepreßt. Daraus wurden Probekörper der Dimension 7,8 x 1,0 x 0.2 cm ausgesägt, entgratet, exakt nachvermessen und gewogen.

**Tabelle 7**

| Beispiel | MFK [%] | PEG 1000 [%] | PEG 10000 [%] | PPG 1000 [%] | Korrosionsrate | |
|---|---|---|---|---|---|---|
| | | | | | Test (10 d) | 1 Test 2 (7 d) |
| | | | | | [%] rel. zu e | |
| g | 0,15 | - | - | - | 100,0 | 100,0 |
| 26 | 0,15 | 0,5 | - | - | 28,5 | - |
| 27 | 0,15 | 1,0 | - | - | 17,4 | - |
| 28 | 0,15 | - | 0,5 | - | 34,3 | 70,4 |
| 29 | 0,15 | - | 1,0 | - | 15,8 | 59,7 |
| 30 | 0,15 | - | - | 0,5 | 35,0 | 73,4 |
| 31 | 0,15 | - | - | 1,0 | 22,0 | 50,5 |

## Patentansprüche

1. Polyoxymethylen mit verbessertem Säureschutz, enthaltend
A mindestens ein Polyoxymethylen,
B 0,01 - 5 Teile, bezogen auf 100 Teile A, mindestens ein Alkalisalz einer mehrwertigen Säure ausgewählt aus der Gruppe Oxalsäure, Maleinsäure, Fumarsäure, und/oder Natrium- und/oder Kaliumsalz der Citronensäure und/oder
C 0,01 - 5 Teile bezogen auf 100 Teile A ein Polyethylenglykol mit einem Molekulargewicht ≦ 5000 und/oder ein Polypropylenglykol und/oder ein Polybutylenglykol,
D 0,1 - 3 Teile bezogen auf 100 Teile A eines thermoplastischen Polyurethans mit einer Shore-Härte A von 70 bis 96.

2. Polyoxymethylen nach Anspruch 1,
**dadurch gekennzeichnet**,
daß sein Masseverlust je Flächeneinheit bei einer Säurenbehandlung max. 75 % beträgt bezogen auf die Komponente A, wobei die Säurebehandlung die folgenden Schritte umfaßt:
kurzes Eintauchen eines Probekörpers in 2 gew.-%ige Phosphorsäure,
Lagern des Probekörpers etwa 24 h bei 20 - 30 % rel. Luftfeuchtigkeit,
ggf. Wiederholen der Schritte bis ein entsprechend behandelter Probekörper aus der Komponente A einen Verlust von mind. 5 mg/cm² aufweist.

3. Polyoxymethylen nach Anspruch 1,
**dadurch gekennzeichnet**,
daß sein Masseverlust je Flächeneinheit bei einer Säurebehandlung max. 75 % beträgt bezogen auf die Komponente A, wobei die Säurebehandlung die folgenden Schritte umfaßt:
Eintauchen eines Probekörpers in 10 gew.-%ige Phosphorsäure bei 80°C,
Kontrolle des Masseverlustes des Probekörpers nach 24 h, wobei der Probekörper der 10 gew.-%igen Phosphorsäure entnommen und mit einem Warmluftgebläse getrocknet wird,
ggf. Wiederholen der Schritte bis ein entsprechend behandelter Probekörper aus der Komponente A einen Verlust von mind. 5 mg/cm² aufweist.

4. Polyoxymethylen nach einem der vorhergehenden Ansprüche,
**dadurch gekennzeichnet**,
daß es neben den Komponenten B und/oder C noch bezogen auf 100 Teile A bis zu 100 Teile eines thermoplastischen Polyurethans und/oder neben den Komponenten B, C und/oder D noch bis zu 5 Teile eines anderen als in C definierten Polyalkylenglykols und/oder bis zu 15 Teile Melamincyanurat enthält.

5. Polyoxymethylen nach einem der vorhergehenden Ansprüche,
**dadurch gekennzeichnet**,
daß es übliche Zusätze, wie z. B. Antioxidantien, Ruß oder andere Farbstoffe, UV-Absorber, Wärmestabilisatoren, Brandschutzmittel, enthält.

6. Formkörper aus einem Polyoxymethylen gemäß einem der vorhergehenden Ansprüche.

7. Verfahren zur Herstellung eines Polyoxymethylens mit verbessertem Säureschutz,
**dadurch gekennzeichnet**,
daß
A 100 Teile eines Polyoxymethylens mit
B 0,01 - 5 Teile eines Salzes einer mehrwertigen Carbonsäure und/oder
C 0,01 - 5 Teile eines Polyalkylenglykols und/oder
D 0,01 - 100 Teile eines thermoplastischen Polyurethans und
E 0 - 15 Teile Melamincyanurat und
F übliche Zusätze
vermischt werden.

8. Verfahren nach Anspruch 7,
**dadurch gekennzeichnet**,
daß die Komponenten B bis D und ggf. E und/oder F in einer solchen Menge zu A zugegeben werden, daß der Masseverlust je Flächeneinheit eines Prüfkörpers bei einer Säurebehandlung max. 75 % beträgt bezogen auf einen Prüfkörper aus Komponente A, wobei die Säurebehandlung die folgenden Schritte umfaßt:
kurzes Eintauchen eines Probekörpers in 2 gew.-%ige Phosphorsäure,
Lagern des Probekörpers etwa 24 h bei 20 - 30 % rel. Luftfeuchtigkeit,
ggf. Wiederholen der Schritte bis ein entsprechend behandelter Probekörper aus der Komponente A einen Verlust von mind. 5 mg/cm² aufweist.

9. Verfahren nach Anspruch 7,
**dadurch gekennzeichnet**,
daß die Komponenten B bis D und ggf. E und/oder F in einer solchen Menge zu A zugegeben werden, daß der Masseverlust je Flächeneinheit eines Prüfkörpers bei einer Säurebehandlung max. 75 % beträgt bezogen auf einen Prüfkörper aus Komponente A, wobei die Säurebehandlung die folgenden Schritte umfaßt:
Eintauchen eines Probekörpers in 10 gew.-%ige Phosphorsäure bei 80°C,
Kontrolle des Masseverlustes des Probekörpers nach 24 h, wobei der Probekörper der 10 gew.-%igen Phosphorsäure entnommen und mit einem Warmluftgebläse getrocknet wird,
ggf. Wiederholen der Schritte bis ein entsprechend behandelter Probekörper aus der Komponente A einen Verlust von mind. 5 mg/cm² aufweist.

10. Verfahren nach einem der Ansprüche 7 bis 9,
**dadurch gekennzeichnet**,
daß das Polyoxymethylen zu einem Formkörper geformt wird.

11. Verwendung von
0,01 - 5 Teilen eines Salzes einer mehrwertigen Carbonsäure (B)
und/oder
0,01 - 5 Teilen eines Polyalkylenglykols, (C)
und/oder
0,01 - 100 Teilen eines thermoplastischen Polyurethans (D)
und
0 - 15 Teilen Melamincyanurat (E)
auf 100 Teile eines Polyoxymethylens (A) zur Verbesserung der Säurebeständigkeit oder in einem Formkörper mit verbesserter Säurebeständigkeit.

12. Verwendung nach Anspruch 11,
**dadurch gekennzeichnet**,
daß die Komponenten B bis D und ggf. E in einer solchen Menge verwendet werden, daß der Masseverlust je Flächeneinheit eines Prüfkörpers bei einer Säurebehandlung max. 75 % beträgt bezogen auf einen Prüfkörper aus Komponente A, wobei die Säurebehandlung die folgenden Schritte umfaßt:
kurzes Eintauchen eines Probekörpers in 2 gew.-%ige Phosphorsäure,
Lagern des Probekörpers etwa 24 h bei 20 - 30 % rel. Luftfeuchtigkeit,
ggf. Wiederholen der Schritte bis ein entsprechend behandelter Probekörper aus der Komponente A einen Verlust von mind. 5 mg/cm² aufweist.

13. Verwendung nach Anspruch 11,
**dadurch gekennzeichnet**,
daß die Komponenten B bis D und ggf. E in einer solchen Menge verwendet werden, daß der Masseverlust je Flächeneinheit eines Prüfkörpers bei einer Säurebehandlung max. 75 % beträgt bezogen auf einen Prüfkörper aus Komponente A, wobei die Säurebehandlung die folgenden Schritte umfaßt:
Eintauchen eines Probekörpers in 10 gew.-%ige Phosphorsäure bei 80°C,
Kontrolle des Masseverlustes des Probekörpers nach 24 h, wobei der Probekörper der 10 gew.-%igen Phosphorsäure entnommen und mit einem Warmluftgebläse getrocknet wird,
ggf. Wiederholen der Schritte bis ein entsprechend behandelter Probekörper aus der Komponente A einen Verlust von mind. 5 mg/cm² aufweist.
